# EUROPÄISCHE PATENTSCHRIFT

(11) **EP 2 744 765 B1**
(45) Veröffentlichungstag und Bekanntmachung des Hinweises auf die Patenterteilung: **20.04.2016**
(21) Anmeldenummer: 12735470.2
(22) Anmeldetag: 16.07.2012
(51) Int. Cl.: C04B 7/32, C04B 7/345, C04B 28/04

(54) **TERNESIT ALS ADDITIV ZU PORTLANDZEMENT**
TERNESITE AS ADDITIVE TO PORTLAND CEMENT
TERNESITE EN TANT QU'ADDITIF AU CIMENT DE PORTLAND

(30) Priorität: 18.08.2011 EP 11006757; 26.10.2011 EP 11008570; 05.03.2012 EP 12001488; 26.03.2012 EP 12002111; 30.03.2012 EP 12002342; 10.05.2012 EP 12003718
(43) Veröffentlichungstag der Anmeldung: 25.06.2014
(73) Patentinhaber: HeidelbergCement AG, 69120 Heidelberg (DE)
(72) Erfinder: BULLERJAHN, Frank, 69181 Leimen (DE); SCHMITT, Dirk, 69181 Leimen (DE); BEN HAHA, Mohsen, 69117 Heidelberg (DE); BATOG, Barbara, 34-480 Jablonka (PL); IRBE, Linda, 82216 Maisach (DE)
(74) Vertreter: Wagner, Jutta
(86) Internationale Anmeldenummer: PCT/EP2012/002974
(87) Internationale Veröffentlichungsnummer: WO 2013/023727

(56) Entgegenhaltungen:
- EP-A1- 0 959 053
- EP-A1- 1 171 398
- DE-A1- 19 843 092
- SHERMAN N ET AL: "Long-term behaviour of hydraulic binders based on calcium sulfoaluminate and calcium sulfosilicate", CEMENT AND CONCRETE RESEARCH, PERGAMON PRESS, ELMSFORD, NY, US, Bd. 25, Nr. 1, 1. Januar 1995 (1995-01-01) , Seiten 113-126, XP002665884, ISSN: 0008-8846
- BERETKA J ET AL: "Influence of C4A3S~ content and W/S ratio on the performance of calcium sulfoaluminate-based cements", CEMENT AND CONCRETE RESEARCH, PERGAMON PRESS, ELMSFORD, NY, US, Bd. 26, Nr. 11, 1. November 1996 (1996-11-01), Seiten 1673-1681, XP002320780, ISSN: 0008-8846, DOI: 10.1016/S0008-8846(96)00164-0
- E. IRRAN ET AL: "Ternesit, Ca5(SiO4)2SO4, ein neues Mineral vom Ettringer Bellerberg, Eifel, Deutschland", MINERALOGY AND PETROLOGY, Bd. 60, Nr. 1-2, 1. Januar 1997 (1997-01-01), Seiten 121-132, XP055030231, ISSN: 0930-0708, DOI: 10.1007/BF01163138

## Beschreibung

Die vorliegende Erfindung betrifft die Herstellung und den Einsatz von Ternesit als Additiv zu Portlandzement und -Bindemitteln.

Die Zementindustrie hat einen erheblichen Anteil an der globalen CO₂-Produktion. Die weltweit wachsende Nachfrage nach Zement vor allem in Entwicklungsländern sowie steigende Kosten für Rohstoffe, Energie und CO₂-Zertifikate führten in den letzten Jahren zur zunehmenden Verringerung des Klinkerfaktors, zum Beispiel durch eine Zugabe von Kalksteinmehlen, Flugaschen und granulierten Hüttensanden als Klinkerersatzstoffe. Diese Verwendung von Nebenprodukten und Abfallprodukten anderer Industrien sowie die Entwicklung alternativer Bindemittel rücken zunehmend in den Fokus des politischen, wissenschaftlichen und wirtschaftlichen Interesses.

Weltweit fallen im Zuge der thermischen Abfallbeseitigung / Energiegewinnung, Stahlerzeugung, Edelmetallgewinnung etc., enorme Mengen an Materialien an, die im Folgenden als industrielle Nebenprodukte bezeichnet werden. Je nach Qualität / Zusammensetzung / Anwendungsgebiet können diese teilweise oder vollständig in verschiedenen Prozessen und Produkten wiederverwendet werden, z.B. als Korrektiv zur Klinkerherstellung von Portlandzement, als Additiv für Beton und als Zuschlag für Asphalt und Beton, etc.

Aufgrund verschiedener Faktoren, wie zum Beispiel der fehlenden Gleichmäßigkeit (Chemismus und Mineralogie) und der Schadstoffgehalte (Organik, Schwermetalle, etc...), ist die Verwendung der industriellen Nebenprodukte aber nicht unproblematisch. Unter anderem kann eine sinkende Reaktivität / Qualität von OPC-Klinker bzw. eine mangelnde Raumbeständigkeit von Zementen dazu führen, dass jährlich große Mengen solcher Materialien kostenintensiv deponiert bzw. als Haldenmaterial und Deponiematerial herangezogen werden müssen. Schwierigkeiten können auch bei der Deponierung solcher Materialien auftreten, z.B. können Auslaugungsprozesse zur Kontamination der umliegenden Flächen und Gewässer / Grundwässer führen. Die Verwendung / Aufbereitung industrieller Nebenprodukte stellt daher eine große Herausforderung und eine noch immer nicht gelöste Aufgabe dar. Eine möglichst effiziente und nachhaltige Ressourcennutzung wird zukünftig unverzichtbar sein und besitzt eine globale Relevanz.

Es werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

### Stand der Technik

EP 1 171 398 B1 (DE 600 29 779 T2) beschreibt die Sinterung spezifischer / ausgewählter, fast ausschließlich natürlicher Rohmaterialien, sowie mindestens einer Quelle für CaF₂, bei 900 bis 1200 °C, um im Ofen Spezialklinker zu produzieren, die hohe Konzentrationen an Kristall X = {(C, K, N, M)₄(A, F, Mn, P, T, S)₃(Cl, $)} und Kristall Y = {(C₂S)₃(C$)₃Ca(f, Cl)₂ or C₉S₃$₃Ca(f,cl)₂} [Mineral aus der Gruppe der Ellestadite] und/oder Kristall Z = {C₅S₂$} aufweisen. Diese Klinker werden mit hydraulischem Zement oder Zement vom Typ Portland gemischt, um fertige Zementzusammensetzungen zu produzieren, wobei der Gehalt an Kristall X zwischen 15 bis 75 Gew.-% des speziellen Klinkers und mindestens 5 Gew.-% der finalen Bindemittelmischung ausmacht.

Aufgabe der Erfindung war die Bereitstellung von Portlandzement und Bindemitteln daraus, welche weniger negativen Einfluss auf die Umwelt haben, indem industrielle Nebenprodukte aber auch alternative natürliche Rohstoffe einen Teil der Rohmehlmischung ausmachen können oder als Komponente des Bindemittels dienen.

Es wurde nun überraschend gefunden, dass die Phase C₅S₂$ (Ternesit auch als Sulfospurrit oder Sulfatspurrit oder Calciumsulfosilikat bezeichnet) eine signifikant reaktive Komponente in Kombination mit reaktivem Aluminium darstellt. In der Literatur (siehe z.B. "Synthesis of Calcium Sulfoaluminate Cements From Al2O3-Rich By-products from Aluminium Manufacture", Milena Marroccoli et al., The second international conference on sustainable construction materials and technologies 2010, "Synthesis of Special Cements from Mixtures Containing Fluidized Bed Combustion Waste, Calcium Carbonate and Various Sources of Alumina", Belz et al, 28th Meeting of the Italian Section of The Combustion Institute 2005, "Fluidized Bed Combustion Waste as a Raw Mix Component for the Manufacture of Calcium Sulphoaluminate Cements", Belz G et al, 29th Meeting of the Italian Section of The Combustion Institute, 2006 und "The Fabrication of Value Added Cement Products from Circulating Fluidized Bed Combustion Ash", Jewell R.B et al, World of Coal Ash (WOCA) Covington, Kentucky, USA, 2007) wird die Phase C₅S₂$ dagegen als wenig reaktiv bzw. inert und in Calciumsulfoaluminatzement als unerwünscht beschrieben. Des Weiteren werden regelmäßig Methoden aufgezeigt diese "unerwünschte Phase" zu vermeiden. Überraschenderweise hat sich bei unseren Versuchen gezeigt, dass eine signifikante Menge dieser Phase C₅S₂$ schon innerhalb der ersten Tage der Hydratation reagiert und die Phasenzusammensetzung der hydratisierten Proben signifikant beeinflusst.

Die obige Aufgabe wird daher durch den Gegenstand der Anspüche 1 und 8 gelöst.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet. Bindemittel oder Bindemittelmischung bezeichnet ein Zement und typischerweise aber nicht zwingend weitere, fein gemahlene Komponenten enthaltendes, hydraulisch erhärtendes Gemisch, welches nach Zusatz von Wasser, ggfs. Zusatzmitteln und Gesteinskörnung, zur Anwendung gelangt.

Ein Klinker kann bereits alle notwendigen bzw. gewünschten Phasen enthalten und nach Vermahlen zu Zement direkt als Bindemittel zum Einsatz kommen. Erfindungsgemäß wird die Zusammensetzung des Bindemittels durch Vermischen von zwei oder mehreren Klinkern und/oder Zementen erhalten, wobei das Vermischen bereits vor (oder während) dem Mahlen und/oder im gemahlenen Zustand und/oder bei der Herstellung des Bindemittels erfolgt. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Soweit nichts anderes angegeben ist mit "reaktiv" eine hydraulische Reaktivität gemeint.

Im Rahmen der vorliegenden Erfindung meint Portland-Kompositzement ein Produkt, bei welchem mindestens ein Teil, bis hin zum überwiegenden Teil, des gemahlenen Portlandzementklinkers durch mindestens einen anderen Stoff, wie zum Beispiel, aber nicht ausschließlich, andere hydraulische, latent-hydaulische, puzzolanische, inerte Materialien substituiert wird. Substitutionsraten liegen dabei typischerweise im Bereich von >5 bis 70%.

Phasen, wie zum Beispiel C₅S₂$, werden vorrangig stöchiometrisch angegeben, jedoch kann die genaue Zusammensetzung abweichen/variieren. Des Weiteren können verschiedene Fremdionen aus der Gruppe der Halogene, Nichtmetalle, Alkali- und Erdalkalimetalle, sowie Vertreter der Übergangs- und Halbmetalle und Metalle in die Kristallstruktur der Phase eingebaut werden. Für den erfindungsgemäßen Klinker sind diese alle geeignet. Vorzugsweise wird zum Beispiel Phosphat, Fluorid, Nitrat oder Chlorid aber auch Natrium und Kalium in die Struktur von C₅S₂$ eingebaut, wodurch diese stabilisiert wird (z.B. bei höheren Temperaturen > 1200°C) und/oder schneller gebildet wird, wobei solche Stoffe im folgenden als Mineralisatoren zusammengefasst werden.

Unter Mineralisatoren sind Stoffe zu verstehen, welche als Flussmittel wirken und/oder die Temperatur senken die zur Bildung einer Schmelze notwendig ist und /oder solche, die die Bildung der Klinkerverbindung fördern, wie zum Beispiel durch Mischkristallbildung und/oder Phasenstabilisierung.

Die separate Herstellung von Ternesit oder einem Klinker bzw. Zement mit Ternesit als mindestens einer der Hauptkomponenten hat den Vorteil, dass Ternesit bzw. dieser Klinker in einem Schritt in einem Temperaturbereich von typischerweise 900 bis 1200°C, vorzugsweise 1050 bis 1150°C hergestellt werden kann. Der so erzeugte Klinker ist sehr porös und leicht mahlbar und die Reaktivität des Klinkers kann z.B. durch die Erhöhung der Gehalte an α C₂S, sowie der Phase C₅S₂$ gezielt, entsprechend der jeweiligen Anforderung des Bindemittels, eingestellt bzw. optimiert werden. Dies kann ebenfalls durch die Zugabe von Mineralisatoren zum Rohmehl erreicht werden, wobei ein Teil, bis hin zum überwiegenden Teil, des Dicalciumsilikates in Form Mischkristallen beziehungsweise von dotiertem "α" C₂S, wie zum Beispiel in Gegenwart von P₂O₅ als Calcium-Phosphat-Silikat [Ca₂SiO₄ · 0.05Ca₃(PO₄)₂], vorliegt. Die Bildung einer Schmelzphase wird begünstigt bzw. hervorgerufen. Die Bildung einer Schmelzphase kann gezielt gesteuert werden, um z.B. die Staubbildung zu minimieren aber auch um gewünschte Eigenschaften des Klinkerproduktes einzustellen (Reaktivität, Mahlbarkeit, etc.).

Eine gezielte Herstellung eines C₅S₂$ Klinkers, die Stabilisierung von C₅S₂$ bei höheren Temperaturen, die mögliche erhöhte Bildungsrate von α C₂S, Mischkristallen von Dicalciumsilikat sowie mindestens einer Schmelzphase im Klinker und der Einsatz des Ternesitklinkers als Additiv für aluminiumreiche Systeme wurde bisher nicht beschrieben. Es ist ein völlig neuartiger Ansatz zu einer Erhöhung der Frühfestigkeit und/oder der Dauerhaftigkeit von Bindemittelsystemen basierend auf Portlandzement und Portlandkompositzement.

Es ergibt sich der weitere Vorteil, dass in dem erfindungsgemäßen Klinker gezielt erhöhte Magnesium / Periklas-Gehalte (> 2 Gew.-%) eingestellt werden können. Aufgrund der geringen Brenntemperatur kann Periklas in einer reaktiven Form vorliegen und zur Festigkeitsentwicklung / Hydratation beitragen.

C₅S₂$ kann durch Sinterung von Rohstoffen, welche ausreichende Mengen CaO, SiO₂ und SO₃ bereitstellen, hergestellt werden. Dabei eignen sich einerseits reine bzw. im Wesentlichen reine Rohstoffe wie Calciumcarbonat oder -oxid, Quarzmehl oder Microsilica, und Calciumsulfat. Andererseits kann eine Vielzahl natürlicher aber auch industrieller Materialien, wie zum Beispiel, aber nicht ausschließlich, Kalkstein, Bauxit, Ton / Tonstein, kalzinierter Ton (z.B. Metakaolin), Basalt, Periodit, Dunit, Ignimbrit, Karbonatit, Asche / Schlacke / Hüttensand hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Rohmaterial verwendet werden. Es fallen ebenfalls namentlich nicht genannte Stoffe / Stoffgruppen in den Schutzbereich, welche die chemischen Mindestanforderungen als potentielle Rohstoffe erfüllen. Die Rohstoffe können, müssen aber nicht, vorbehandelt werden.

In der Rohmehlmischung enthaltenes Eisen wird in die Phase C₂AF und bevorzugt in die Phase C₄A₃$ eingebaut werden. Der Fremdioneneinbau kann zu einer erhöhten Bildungsgeschwindigkeit der Phase in der heißen Zone führen, was wiederum potentiell die benötigte Verweildauer verringert und / oder zu ihrer quantitativen Zunahme führen kann. Die Bezeichnung Al₂O₃(Fe₂O₃) bedeutet ebenso wie in der Angabe C₄(AₓF₁₋ₓ)₃$ für die Klinkerphase, dass Aluminium teilweise durch Eisen ersetzbar ist, d.h. x ist eine Zahl von 0,1 bis 1,0. Typischerweise liegt hauptsächlich Aluminium mit geringen Beimengungen von Eisen vor, es liegt aber im Rahmen der Erfindung erhebliche Mengen Eisen bis hin zu einem überwiegenden Gehalt an Eisen einzusetzen.

Ein Nachweis für den Einbau von Eisen ist die quantitative Abnahme eisenreicher Phasen (z.B. Fe₃O₄, C₂F und C₄AF), die Zunahme der Phase C₄A₃$ bzw. C₄(AₓFe₍₁₋ₓ₎)₃$, sowie die Zunahme der Peakintensitäten und des Gitterparameters c (A) [Kristallsystem: Orthorhombisch] von 9,1610 [PDF-Nummer: 01-085-2210, Tetracalcium hexaaluminate sulfate(VI) - Ca₄ (Al₆O₁₂)(SO₄), ICSD Collection Kode: 080361, Calculated from ICSD using POWD-12++, (1997), Struktur: Calos, N.J., Kennard, C.H.L., Whittaker, A.K., Davis, R.L., J. Solid State Chem., 119, 1, (1995)] über 9,1784 [PDF-Nummer: 00-051-0162, Calcium Aluminum Iron Oxide Sulfate - Ca₄((Al_{0.95}Fe_{0.05}))₆O₁₂(SO₄), ICSD Collection Kode: -, Primärer Verweis: Schmidt, R., Pöllmann, H., Martin-Luther-Univ., Halle, Germany., ICDD Grant-in-Aid, (1999)] bis zu Werten von über 9,2000. Die Prüfung auf eine etwaige Mischkristallbildung kann ebenfalls mittels der Bestimmung der Besetzungsfaktoren bei einer Rietveld-Anpassung durch Unter- oder Gemischtbesetzungen einzelner Atomlagen ermittelt werden. Ein weiterer rein qualitativer Indikator ist die zum Teil deutliche Farbveränderung der Klinker. So ändert sich die Farbe der Klinker von einem Kastanien- / Ockerbraun über Grünbraun bis hin zu einem hellen Grauton.

Ternesit kommt auch als Mineral vor, jedoch sind keine Lagerstätten bekannt, aus denen es in ausreichender Menge bzw. Reinheit gewonnen werden kann, so dass der Einsatz von "natürlichem" Ternesit zwar möglich, in der Praxis aber unwirtschaftlich ist. Eine Herstellung durch Sinterung geeigneter Rohstoffe ist erfindungsgemäß vorzuziehen.

Die Rohstoffe für die Herstellung des erfindungsgemäßen Ternesit-Klinkers werden in an sich bekannter Weise auf übliche Feinheiten gemahlen. Feinheiten von 2000 bis 10000 cm²/g, vorzugsweise im Bereich von 3000 bis 6000 cm²/g und besonders bevorzugt von 4000 bis 5000 cm²/g sind besonders gut geeignet. Die Mahlfeinheit richtet sich in erster Linie nach der Art und Zusammensetzung des eingesetzten Rohstoffes, dem Brennprozess (Temperatur, Verweildauer in der Sinterzone, etc.) sowie den angestrebten Eigenschaften des Bindemittels und den zur Verfügung stehenden technischen Möglichkeiten.

Soll die Herstellung möglichst reines C₅S₂$ ergeben, werden Rohstoffe gewählt, welche neben Quellen für CaO, SiO₂ und SO₃ keine oder nur wenig weitere Bestandteile enthalten. Die Umsetzung von Calciumcarbonat mit Quarzmehl und Calciumsulfat im Temperaturbereich von 900 bis 1200 °C, vorzugsweise 1050 bis 1150 °C ergibt C₅S₂$ mit einer Reinheit von > 99 %.

Es ist jedoch bevorzugt, wenn zur Herstellung von C₅S₂$ ein möglichst hoher Anteil kostengünstiger und umweltverträglicher Rohstoffe zum Einsatz kommt. Umweltverträglich meint hierbei einen möglichst geringen Energieeinsatz und/oder die Schonung natürlicher Rohstoffe bzw. hochwertiger Abfall- und Nebenprodukte. Dem Patent EP 1 171 398 B1 ist die Verwendung solcher Materialien als Komponente der Rohmehlmischung nicht zu entnehmen.

Eine Umsetzung von etwa 25% der Flugasche FA1 (siehe Beispiele) mit etwa 45% Kalkstein K1, etwa 8% Quarz (Merck, p.a.) und etwa 20 % MicroA (natürlicher Anhydrit) ergab einen Klinker mit einem C₅S₂$ Gehalt von > 70 % und bei Umsetzung von ∼8% Metakaolin, ∼58% K1, ∼23% Micro A und ∼10% SiO₂ wurden Reinheiten von > 80 % erreicht.

Die Umsetzung dieser Rohstoffe erfolgt bevorzugt ebenfalls im Temperaturbereich von 900 bis 1200 °C, vorzugsweise 1050 bis 1150 °C. Hierbei wird, im Gegensatz zur bekannten Sinterung derselben Rohstoffe mit dem Ziel der Bildung von C₄A₃$ bei mindestens 1200 °C, im wesentlichen Ternesit gebildet. Je nach Rohstoffzusammensetzung können auch höhere Temperaturen von z.B. bis 1300 °C geeignet sein, beispielsweise, wenn relevante Mengen Phosphor enthalten sind, wie es bei einer Verwendung von Phosphorgips der Fall ist. Im Unterschied zu den bekannten Verfahren/Klinkern steht erfindungsgemäß jedoch die Bildung von Ternesit im Fokus, die Sintertemperatur wird daher für dessen Bildung optimiert. Bei diesen Temperaturen treten vorteilhaft, neben Ternesit, auch vermehrt reaktive Polymorphe des Dicalciumsilikates auf. Im Stand der Technik wurde dagegen die Sintertemperatur für die Bildung von C₄A₃$ optimiert, Ternesit sollte möglichst nicht gebildet werden. Demgegenüber wird erfindungsgemäß die Temperatur so gewählt, dass möglichst viel Ternesit gebildet wird und, sofern die Rohstoffe Quellen für Al₂O₃ bzw. Fe₂O₃ enthalten, der Gehalt an C₄(AₓF₍₁₋ₓ₎)₃$ auf weniger als 15 % begrenzt wird. Zwar könnten auch Klinker mit mehr C₄(AₓF₍₁₋ₓ₎)₃$, mit x von 0,1 bis 1, vorzugsweise von 0,8 bis 0,95, verwendet werden, aber ein höherer Gehalt davon geht zu Lasten von Ternesit und die entsprechend höhere Sintertemperatur kann auch die Reaktivität von Ternesit beeinträchtigen.

Der Temperaturbereich von 900°C bis 1300°C, vorzugsweise von 1050°C bis 1150°C, sollte für einen Zeitraum von 10 min bis 180 min, vorzugsweise von 25 min bis 120 min und noch stärker bevorzugt von 30 min bis 60 min durchlaufen werden. Der Klinker kann zur weiteren Bildung gewünschter Phasen während der Abkühlung den Bereich von 900°C bis 750°C für einen Zeitraum von 5 min bis 120 min, vorzugsweise von 10 min bis 60 min durchlaufen. Abschließend oder aber auch ohne eine verzögerte Abkühlung, durch den Bereich von 900° bis 750°C, wird der Klinker in an sich bekannter Weise rapide abgekühlt, so dass weitere Phasenumwandlungen verhindert werden.

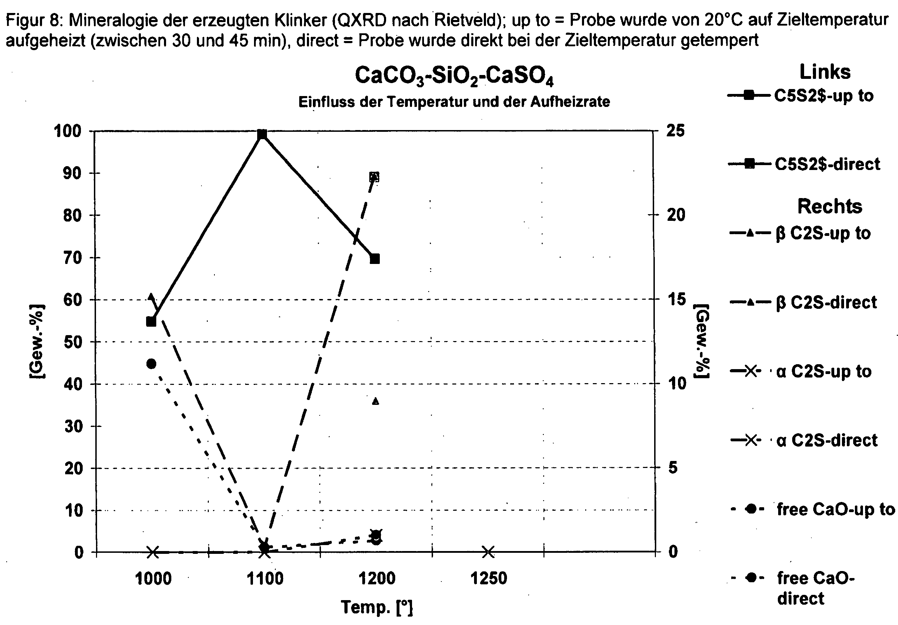

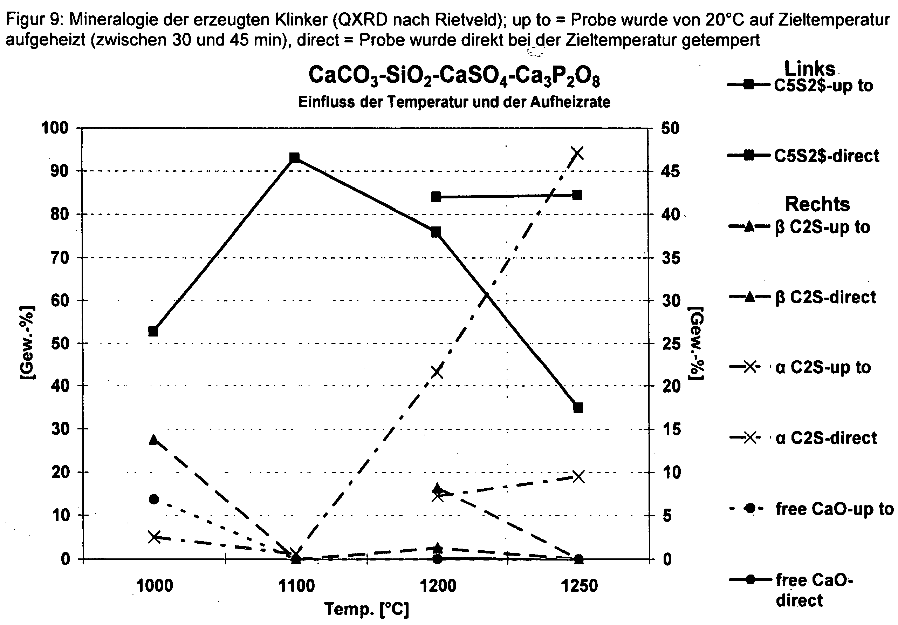

Überraschenderweise hat sich des Weiteren gezeigt, dass die Aufheizrate sowie der Einsatz von Mineralisatoren einen signifikanten Einfluss auf die Zusammensetzung des Klinkers und die Menge und Anteile der reaktiven Phasen ausübt. Die Figuren 8 und 9 (siehe Beispiel 7) zeigen die Zusammensetzung von Ternesitklinkern, hergestellt aus einer Rohmehlmischung, welche bei unterschiedlichen Temperaturen und Aufheizraten. Es wurden auch Versuche in Gegenwart von Mineralisatoren (CaF₂, Na₂CO₃, K₂CO₃, FeCl₃, MgCl₂, weitere) durchgeführt, wobei exemplarisch Ergebnisse für die Versuche mit Ca₃P₂O₈ dargestellt sind. Es hat sich gezeigt, dass im Falle des reinen Ternesitklinker, ohne Mineralisatoren, neben C₅S₂$, in Abhängigkeit von der gewählten Temperatur und Aufheizrate, β C₂S und CaO gebildet werden und dass eine hohe Aufheizrate (Ofen auf die gewünschte Zieltemperatur eingestellt, d.h. das Rohmehl wurde direkt bei der entsprechenden Temperatur gesintert) die Bildung von C₅S₂$ auch noch bei höheren Temperaturen begünstigt. Der Einsatz von Mineralisatoren zeigt für hohe Aufheizraten vergleichbare Ergebnisse. Bei geringeren Aufheizraten bilden sich nahezu ausschließlich Ternesit und Polymorphe von α C₂S sowie Mischkristalle von α Dicalciumsilikat und den Mineralisatoren, mindestens eine röntgenamorphe Phase / eine Schmelzphase, kein / nahezu kein β C₂S und kein CaO (bei hohen Temperaturen).

Eine gezielte Herstellung eines C₅S₂$ Klinkers, die Stabilisierung von C₅S₂$ bei höheren Temperaturen, die mögliche erhöhte Bildungsrate von α C₂S, von Mischkristallen von α Dicalciumsilikat sowie von mindestens einer Schmelzphase im Klinker durch den gezielten Einsatz von Mineralisatoren und die Steuerung der Aufheizrate wurden bisher nicht für auf Ternesit basierende Klinker beschrieben. Es ist ein völlig neuer Ansatz zur Herstellung eines neuartigen und hoch reaktiven Klinkers.

Klinker mit Ternesit als Hauptkomponente ohne nennenswerte Mengen Ye'elimit sind bisher stets vermieden worden und daher neu und ebenfalls Gegenstand der vorliegenden Erfindung, ebenso wie ihre Verwendung als Additiv in Portlandzement und Bindemitteln daraus.

Der C₅S₂$ als Hauptkomponente enthaltende Klinker bzw. ein daraus durch Mahlen ohne Zusätze erhaltener Zement enthält erfindungsgemäß die folgenden Komponenten in den angegebenen Anteilen:
- C₅S₂$ 20 bis 100 Gew.-%,
   bevorzugt 30 bis 95 Gew.-% und noch stärker bevorzugt 40 bis 90 Gew.-%
- (α, β) C₂S 0 bis 80 Gew.-%,
   bevorzugt 5 bis 70 Gew.-% und noch stärker bevorzugt 10 bis 60 Gew.-%
- C₄(AₓF₍₁₋ₓ₎)₃$ 0 bis < 15 Gew.-%,
   bevorzugt 3 bis 12 Gew.-% und noch stärker bevorzugt 5 bis 10 Gew.-%
- C₂(A_{y}F_{(1-y)}) 0 bis 30 Gew.-%,
   bevorzugt 5 bis 20 Gew.-% und noch stärker bevorzugt 8 bis 15 Gew.-%
- Reaktive Aluminate 0 bis 20 Gew.-%,
   bevorzugt 1 bis 15 Gew.-% und noch stärker bevorzugt 3 bis 10 Gew.-%
- Periklas (M) 0 bis 25 Gew.-%,
   bevorzugt 1 bis 15 Gew.-% und noch stärker bevorzugt 2 bis 10 Gew.-%
- Nebenphasen 0 bis 30 Gew.-%,
   bevorzugt 3 bis 20 Gew.-% und noch stärker bevorzugt 5 bis 10 Gew.-% bezogen auf die gesamte Menge an Klinker/Zement, wobei sich die Anteile der Phasen zu 100% addieren.

Die Angabe (α, β)C₂S bedeutet, dass es sich um Polymorphe von C₂S und deren Gemische handeln kann, wobei die reaktiven α Polymorphe (z.B. α, α'_{L}, α'_{H}) bevorzugt werden. Vorzugsweise sind mindestens 5 Gew.-% α Polymorphe von C₂S enthalten, da diese vorteilhaft zu einer hohen Frühfestigkeit beitragen.

Durch die Zugabe von Mineralisatoren zum Rohmehl kann ein Teil, bis hin zum überwiegenden Teil, des Dicalciumsilikates in Form von dotiertem "α" C₂S, wie zum Beispiel in Gegenwart von P₂O₅ als Calcium-Phosphat-Silikat [Ca₂SiO₄ · 0.05Ca₃(PO₄)₂], vorkommen. Solche Verbindungen fallen ebenfalls in die Gruppe der reaktiven α C₂S Polymorphe und den Schutzbereich der vorliegenden Erfindung.

Ein Ternesitklinker enthaltend unter anderem reaktive α Polymorphe von C₂S sowie dotiertes "α" C₂S wurde noch nie beschrieben und ist auch dem Patent EP 1 171 398 B1 nicht zu entnehmen.

Bei der Phase C₄(AₓF₍₁₋ₓ₎)₃$ liegt x im Bereich von 0,1 bis 1, vorzugsweise von 0,8 bis 0,95. Bei der Phase C₂(A_{y}F(_{1-y)}) liegt y im Bereich von 0,2 bis 0,8 und vorzugsweise im Bereich von 0,4 bis 0,6.

Unter reaktiven Aluminaten sind zum Beispiel, aber nicht ausschließlich, C₃A, CA und C₁₂A₇ zu verstehen.

Als Nebenphasen können zum Beispiel, aber nicht ausschließlich, Alkali/ErdalkaliSulfate, Quarze, Spinelle, Olivine, Pyroxene, Vertreter der Melilith- und Merwinit-Gruppe, Apatite, Ellestadite, Silicocarnotit, Freikalk, Spurrit, Quarz und/oder ein röntgenamorpher Phasenbestand / eine Glasphase, in einem Anteil von 0 Gew.-% bis 30 Gew.-%, vorzugsweise von 2 Gew.-% bis 20 Gew.-% und besonders bevorzugt von 5 Gew.-% bis 15 Gew.-% auftreten. Der Freikalkgehalt des Klinkers liegt unter 5 Gew.-%, vorzugsweise unter 2 Gew.-% und besonders bevorzugt unter 1 Gew.-%. In bevorzugter Ausführung enthält der Ternesitklinker 1 bis 10 Gew.-%, vorzugsweise 2 bis 8 Gew.-% und noch stärker bevorzugt 3 bis 5 Gew.-% einer röntgenamorphen Phase / einer Glasphase.

Ein Ternesitklinker enthaltend unter anderem einen röntgenamorphen Phasenbestand / eine Glasphase wurde bisher nicht beschrieben und ist auch dem Patent EP 1 171 398 B1 nicht zu entnehmen.

Die Gehalte der Hauptoxide eines C₅S₂$ als Hauptphase enthaltenden, separat hergestellten Klinkers umfassen folgende Bereiche:
- CaO 40 bis 70 Gew.-%, bevorzugt 45 bis 60 Gew.-% und noch stärker bevorzugt 50 bis 55 Gew.-%
- SiO₂ 5 bis 30 Gew.-%, bevorzugt 10 bis 25 Gew.-% und noch stärker bevorzugt 15 bis 23 Gew.-%
- SO₃ 3 bis 30 Gew.-%, bevorzugt 5 bis 26 Gew.-% und noch stärker bevorzugt 8 bis 22 Gew.-%
- Σ(Al₂O₃+Fe₂O₃) 0 bis 40 Gew.-%, bevorzugt 5 bis 30 Gew.-% und noch stärker bevorzugt 8 bis 20 Gew.-%
- MgO 0 bis 25 Gew.-%, bevorzugt 2 bis 15 Gew.-% und noch stärker bevorzugt 5 bis 10 Gew.-%
bezogen auf die gesamte Menge an Klinker/Zement, wobei sich die Anteile der Gehalte zu 100% addieren.

Das erfindungsgemäße Bindemittel und/oder der erfindungsgemäße Zement umfasst als Hauptphasen zumindest C₅S₂$ und die für Portlandzement typischen Phasen C₂S, C₃S und C₂(A_{y}F_{(1-y)}), mit y von 0,2 bis 0,8, vorzugsweise von 0,4 bis 0,6 und vorzugsweise reaktive Polymorphe von C₂S aus dem Ternesitklinker. Typischerweise enthält das Bindemittel außerdem Alkali- und Erdalkalisulfate,und kann Freikalk enthalten. Ein Gehalt an C₄A₃$ beträgt maximal 5 Gew.-%, Bevorzugt enthält das Bindemittel außerdem Zusatzmittel und/oder Zusatzstoffe sowie ggfs. weitere hydraulisch aktive Komponenten, wie zum Beispiel, aber nicht ausschließlich Calciumaluminatzement, Geopolymerzement, Calciumsulfoaluminatzement. Bei den Zusatzstoffen kann es sich um latent hydraulische, puzzolanische und/oder nicht hydraulisch aktive (z.B. gemahlener Kalkstein / Dolomit, gefälltes CaCO₃, Mg(OH)₂, Ca(OH)₂, Aluminiumhydroxide [z.B. amorphes Al(OH)₃], lösliche Alkali-Aluminate [z.B. Na₂Al₂O₄], Silica Fume) Komponenten handeln.

Zement und Bindemittel können durch Zumischen von Ternesit zu Portlandzementklinker, Portlandzement oder Portlandzement - Bindemittel erhalten werden.

Das erfindungsgemäße Bindemittel wird durch die Kombination eines Portlandzementklinkers oder Portlandzements mit einem Klinker und/oder Zement, enthaltend von 20 bis 100 Gew.-% C₅S₂$ zu einem Zement / Bindemittel erhalten. Portlandzement enthält typischerweise 50 bis 70 % C₃S, 10 bis 40 % C₂S, 0 bis 15 % C₃A, 0 bis 20 % C₄AF, 2 bis 10 % C$, 0 bis 3 % C und 0 bis 5 % Cc. Die chemische Zusammensetzung ist in der Regel 55 - 75 % CaO,
15 - 25 % SiO₂, 2 - 6 % Al₂O₃, 0 - 6 % Fe₂O₃ und 1,5 - 4,5 % SO₃. Die mindestens zwei Komponenten der Bindemittelmischung liegen dabei in folgenden Anteilen vor:
- Portlandzementklinker oder Portlandzement 20 bis 95 Gew.-%, bevorzugt 40 bis 90 Gew.-% und noch stärker bevorzugt 60 bis 85 Gew.-%
- Klinker oder Zement enthaltend C₅S₂$ 5 bis 80 Gew.-%, bevorzugt 10 bis 60 Gew.-% und noch stärker bevorzugt 15 bis 50 Gew.-%.
Die Anteile sind bezogen auf die gesamte Menge an Bindemittel, wobei sich die Anteile aller Komponenten zu 100% addieren.

Vorzugsweise enthält der Zement bzw. die Bindemittelmischung außerdem als Zusatzmittel einen oder mehrere Abbinde- und / oder Erhärtungsbeschleuniger, vorzugsweise ausgewählt unter Komponenten mit verfügbarem Aluminium beziehungsweise solchen, die in Kontakt mit Wasser Aluminium, zum Beispiel in der Form von Al(OH)₄⁻ oder amorphes Al(OH)₃-Gel, freisetzen, wie zum Beispiel, aber nicht ausschließlich, lösliche Alkali-Aluminate [z.B. Na₂Al₂O₄, K₂Al₂O₄, etc.], amorphes Aluminiumhydroxid (z.B. Al(OH)₃). Des Weiteren kann der Zement bzw. die Bindemittelmischung als Zusatzmittel einen oder mehrere Abbinde- und / oder Erhärtungsbeschleuniger, ebenfalls in Kombination mit den vorgenannten Komponenten mit verfügbarem Aluminium, vorzugsweise ausgewählt unter Lithiumsalzen und -hydroxiden, anderen Alkalisalzen und -hydroxiden, Alkalisilikaten enthalten.

Zusätze, wie zum Beispiel Alkali-Aluminate und Alkalisalze, -silikate und -hydroxide, welche den pH-Wert der Lösung und damit einhergehend die Reaktivität von C₅S₂$ zusätzlich erhöhen, sind besonders bevorzugt und können in einer Menge im Bereich von 0,01 bis 10 Gew.-%, vorzugsweise von 0,5 bis 5 Gew.-% und noch stärker bevorzugt von 1 bis 2 Gew.-% dosiert werden.

Es ist weiter bevorzugt, wenn Betonverflüssiger und / oder Fließmittel und / oder Verzögerer, vorzugsweise auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und borate, Oxalate, Sulfanilsäure, Aminocarbonsäuren, Salicylsäure und Acetylsalicylsäure, Dialdehyde enthalten sind.

Ein üblicher Portlandklinker kann mit einem Klinker und/oder Zement, hauptsächlich enthaltend C₅S₂$ von 20 bis 100 Gew.-%, sowie weiteren Sulfatträgern gemeinsam vermahlen jedoch auch separat gemahlen und anschließend zu einem Zement / Bindemittel kombiniert werden.

Es hat sich gezeigt, dass dem Bindemittel künstliche und natürliche (getemperte) Puzzolane (wie zum Beispiel, aber nicht ausschließlich Ziegelmehl, Flugaschen, Tuff, Trass, Sedimente mit hohem Anteil an löslicher Kieselsäure, getemperte Tone und Schiefer, künstliche Gläser, etc.), latent hydraulische Materialien (wie zum Beispiel, aber nicht ausschließlich, Hüttensand, künstliche Gläser, W Flug aschen, etc.) und deren Kombinationen mit relativ hohen Gehalten zugesetzt werden können (solche Materialien werden im folgenden als Cementitious Materials [CM] zusammengefasst). Bei Zugabe von CM können die Anteile von Bindemittel aus Ternesit und Portlandzement zu dem Anteil solcher Zugaben und/oder Mischungen von:
- Bindemittel 20 bis 95 Gew.-%, vorzugsweise 40 bis 80 Gew.-% und noch stärker bevorzugt 50 bis 70 Gew.-%
- CM 5 bis 80 Gew.-%, vorzugsweise 20 bis 60 Gew.-% und noch stärker bevorzugt 30 bis 50 Gew.-%
reichen, wobei die Werte auf die gesamte Menge an Bindemittel bezogen sind und sich die Anteile mit den restlichen Bindemittelkomponenten zu 100% addieren. In diesem Fall kann der Portlandzement auch als Portlandkompositzement bezeichnet werden.

Besonders bevorzugt werden künstliche und natürliche Puzzolane und latent hydraulische Materialien zugefügt, welche mit dem Ternesit einen eigenen Beitrag zur Festigkeitsentwicklung liefern. Es wurde nämlich überraschend gefunden, dass im Falle von Aluminium-reichen Puzzolanen/latent hydraulischen Materialien deren Aluminium, welches im Zuge der Hydratation freigesetzt wir (z.B. in der Form von Al(OH)₄⁻ oder als amorphes Aluminiumhydroxid(-Gel), mit Ternesit umgesetzt wird. Besonders vorteilhaft ist dabei, dass Ternesit in der Lage ist, kontinuierlich Sulfat bereitzustellen, so dass auch zeitlich spät vorliegendes Al(OH)₄⁻ oder amorphes Aluminiumhydroxid, zum Beispiel durch die Reaktion von Hüttensand und/oder Flugasche gebildet, umgesetzt werden kann. Sulfattreiben wird, zumindest weitgehend und in der Regel vollständig, verhindert.

Das erfindungsgemäße Bindemittel bildet in Gegenwart von Wasser durch die Reaktion mit zum Beispiel C₃A, C₄AF, Aluminium aus dem Hüttensand und/oder der Flugasche AFₜ- und AFₘ-Phasen, Metall-Metall-Hydroxisalze sowie Al(OH)₃. Die Bildung/Freisetzung von Al(OH)₄⁻ oder als amorphes Aluminiumhydroxid(-Gel) führt zur fortschreitenden Reaktion der C₅S₂$-Phase und stellt einerseits zusätzliches Sulfat zur Verfügung, was wiederum AFₜ stabilisiert und eine mögliche Transformation zu AFₘ vermeidet / verringert, andererseits wird eine reaktive Form von C₂S freigesetzt, C₅S₂$ oder (C₂S)₂ • C$ ↔ 2 C₂S + 1 C$, die mit Wasser aber auch mit dem verfügbaren Al(OH)₃ reagieren und C₂AS • 8 H₂O (Strätlingit) sowie C-(A)-S-H bilden kann. Die Stabilisierung von AFₜ und der Verbrauch von Al(OH)₃ sowie die Verringerung der Porosität durch die Bildung von C₂AS • 8 H₂O und C-(A)-S-H des erfindungsgemäßen Zementes führt zu einer deutlichen Verbesserung der Dauerhaftigkeit zum Beispiel, aber nicht ausschließlich, durch die Verringerung der Gesamtporosität und / oder des verbundenen Porenraums und die Beständigkeit gegenüber einem möglichen Sulfatangriff.

Bevorzugte Puzzolane / latent hydraulische Materialien sind getemperte Tone (z.B. Metakaolin) und Schiefer, Flugaschen, Hüttensande sowie künstliche (puzzolanische und latent hydraulische) Gläser.

Die Komponenten des erfindungsgemäßen Bindemittels können separat oder gemeinsam, sowie mit oder ohne zusätzliche Sulfatträger, in an sich bekannter Weise auf übliche Zementfeinheiten (nach Blaine) von 2000 bis 10000 cm²/g, vorzugsweise von 3000 bis 6000 cm²/g und besonders bevorzugt von 4000 bis 5000 cm²/g gemahlen werden. Als Sulfatträger eignen sich besonders Alkali- und / oder Erdalkalisulfate, vorzugsweise in Form von Gips und / oder Halbhydrat und / oder Anhydrit und / oder Magnesiumsulfat. Eine bevorzugte Ausführungsform ist die gemeinsame Mahlung der latent-hydraulischen und/oder puzzolanischen Materialien mit dem C₅S₂$ enthaltenden Klinker/Zement.

Der C₅S₂$ enthaltende Klinker, besonders wenn dieser wenig andere Phasen aufweist, lässt sich mit sehr geringem Energieeinsatz mahlen, so dass dieser, wenn zum Beispiel eine höhere Reaktivität (schnellere Umsetzung / Verbrauch) von C₅S₂$ erwünscht ist, auf höhere Feinheiten des C₅S₂$-enthaltenden Klinkers durch separates Mahlen oder Vormahlen eingestellt werden kann. Das ermahlene Produkt kann, wenn für eine spezielle Anwendung benötigt, auf eine Partikelgrößenverteilung mit d₅₀ kleiner 20 µm und d₉₀ kleiner 100 µm, beziehungsweise einem d₅₀ kleiner 5 µm und einem d₉₀ kleiner 20 µm aber auch einem d₅₀ kleiner 0,1 µm und einem d₉₀ kleiner 2 µm aufweisen.

Eine intensive Aufmahlung des C₅S₂$ enthaltenden Klinkers kann dazu führen, dass der Phasenbestand des Klinkers, z.B. C₅S₂$, teilweise (oft 3 bis 20 %) bis nahezu vollständig (> 90 %) röntgenamorph vorliegt. Dies geht mit einer signifikanten Erhöhung der Reaktivität einher und erlaubt die Formulierung von neuartigen, hoch reaktiven Bindemittelsystemen.

Ein sehr fein gemahlener Ternesit-Klinker kann schon innerhalb der ersten 24 h bis 7 Tage zur Festigkeit beitragen. Eine solche Aufmahlung ist bei einem Klinker, der signifikante Anteile (z.B. 15 % und mehr) an C₄A₃$ enthält, nicht möglich, weil C₄A₃$ leichter mahlbar ist als C₅S₂$ und daher zu fein gemahlen werden würde. Die hohe Reaktivität des C₄A₃$ und der hohe Wasseranspruch würden bei entsprechend feiner Mahlung des C₅S₂$ in einem Ternesit-Calciulsulfoaluminat-Klinker den Erhalt eines brauchbaren Bindemittels verhindern.

Bei der Verarbeitung des erfindungsgemäßen Zementes bzw. eines diesen enthaltenden Bindemittels ist ein Wasser / Bindemittelwert von 0,2 bis 2 geeignet, bevorzugt von 0,3 bis 0,55 und besonders bevorzugt von 0,35 bis 0,45.

Zur Herstellung des Bindemittels können Einzelkomponenten oder Komponentengemische verwendet werden, je nach Qualität und Zusammensetzung der verfügbaren Rohstoffe bzw. Klinker.

Portland(komposit)zement und Portlandzementklinker sind in verschiedenen Zusammensetzungen bekannt und verfügbar. Von der erfindungsgemäßen Zugabe profitieren vor allem Bindemittel, in denen höhere Mengen reaktives Aluminium verfügbar sind. Jedoch ist auch bei Portlandzement mit durchschnittlichem Gehalt an Aluminat/Ferrit-Phasen eine positive Wirkung gegeben. Im Gegensatz zu EP 1 171 398 B1 wird aber nicht eine Umsetzung unter Beteiligung von Ye'elimit (Mindestgehalt C₄A₃$ im finalen Bindemittel: dort ≥ 5 Gew.-%) zur Festigkeitsbildung genutzt, sondern die Reaktion des speziellen Ternesitklinkers, wobei C₅S₂$ mit den Aluminaten / Ferriten aus dem Portlandzement und ggfs. dem freigesetzten reaktiven Aluminium der zugemischten CM umgesetzt wird und ggfs. die reaktiven Polymorphe von C₂S einen zusätzlichen Festigkeitsbeitrag leisten. Diese Umsetzung ist sowohl bei früh verfügbarem Aluminium als auch bei später, insbesondere aus CM freigesetztem Aluminium vor großem Vorteil. Überraschenderweise kann Ternesit auch als Alternative zu üblichen Sulfatträgern eingesetzt werden. Dem Patent EP 1 171 398 B1 ist die Verwendung von CM nicht zu entnehmen.

Der erfindungsgemäße Zement bzw. das erfindungsgemäße Bindemittel eignet sich hervorragend zur Verfestigung von Altlasten. Hierbei ist ein Gehalt an adsorptiv wirksamen Zusatzstoffen, z.B. Zeolithen und / oder lonenaustauscherharzen, bevorzugt. Bei der Immobilisierung von Schwermetallen in anorganischen Bindemitteln kann ein hoher pH-Wert von Vorteil sein, der die Bildung schwer löslicher Hydroxide begünstigt. Dies kann zum Beispiel, aber nicht ausschließlich, durch ein Mischen des erfindungsgemäßen Klinkers mit Portlandzement in einem Bindemittel realisiert werden.

Ein weiterer Vorteil der erfindungsgemäßen Zements bzw. der Bindemittelmischung daraus ist die Bildung verschiedener Phasen im Zuge der Hydratation (z.B. Ettringit [AFₜ], Monophasen [AFₘ], Metall-Metall Hydroxisalze [LDH], etc..), die verschiedene Schwermetalle sowie weitere Schadstoffe (zum Beispiel, Chloride, etc.) in ihrer Struktur einbauen und somit dauerhaft fixieren können.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 1 sind die verwendeten latent-hydraulischen und/oder puzzolanischen Materialien bzw. Rohstoffe, mit denen die im Folgenden beschriebenen Beispiele durchgeführt wurden, anhand ihrer oxidischen Hauptbestandteile und ihrer Mahlfeinheit charakterisiert. Der Gewichtsverlust nach einem Tempern bei 1050°C ist ebenfalls angegeben. Tabelle 2 zeigt die mineralogische Phasenzusammensetzung der verwendeten latent-hydraulischen und/oder puzzolanischen Materialien sowie des Portlandzementklinker (Aqu-K) und des Portlandzement (Aqu-Z). Die berechnete chemische und die gemessene mineralogische Zusammensetzung der Ternesit-Klinkerqualitäten sind in Tabelle 3 angegeben.

**Tabelle 1: Elementare Zusammensetzung der verwendeten Rohstoffe (RFA)**

| Material | | Kalkstein | Hüttens. | Flugasche | | | Sulfat | Al-Korr. | Metakaolin |
|---|---|---|---|---|---|---|---|---|---|
| Probe | | K1 | BFS | FA1 | FA2 | FA3 | MicroA | Al(OH)₃ | MK |
| RFA | Einheit | | | | | | | | |
| GV 1050 °C | % | 43,09 | 1,80 | 0,82 | 0,10 | 2,79 | 4,64 | 34,64 | 1,91 |
| SiO₂ | | 1,53 | 36,48 | 28,50 | 45,60 | 47,44 | 4,17 | -- | 48,00 |
| Al₂O₃ | | 0,35 | 11,58 | 12,50 | 20,60 | 27,88 | 1,36 | 65,36 | 41,60 |
| TiO₂ | | 0,03 | 0,88 | 1,05 | 0,68 | 1,38 | 0,04 | -- | 0,00 |
| MnO | | 0,01 | 0,37 | 0,18 | 0,05 | 0,06 | 0,00 | -- | 0,00 |
| Fe₂O₃ | | 0,19 | 0,52 | 5,18 | 8,17 | 5,89 | 0,37 | -- | 1,80 |
| CaO | | 54,50 | 38,46 | 37,40 | 19,3 | 7,54 | 37,40 | -- | 5,70 |
| MgO | | 0,22 | 7,52 | 4,81 | 2,17 | 2,48 | 1,82 | -- | 0,10 |
| K₂O | | 0,04 | 0,44 | 0,28 | 1,63 | 1,46 | 0,28 | -- | 0,95 |
| Na₂O | | 0,00 | 0,18 | 0,07 | 0,30 | 0,59 | 0,06 | -- | 0,00 |
| SO₃ | | 0,01 | 2,19 | 7,71 | 1,13 | 0,29 | 49,80 | -- | 0,00 |
| P₂O₅ | | 0,01 | 0,00 | 1,27 | 0,22 | 1,77 | 0,00 | -- | 0,00 |
| Summe | | 99,98 | 100,42 | 99,77 | 99,95 | 99,67 | 99,94 | 100,00 | 100,06 |
| | | | | | | | | | |
| Amorph | % | / | >99% | 38,0 | 88,0 | 58,9 | -- | -- | >95 |
| Dichte | g/cm³ | 2,64 | 2,81 | 2,82 | 2,66 | 2,3 | -- | -- | 2,54 |
| Mahlfeinheit nach Blaine | cm²/g | 3350 | 4370 | 4380 | 5500 | 4270 | -- | -- | -- |

**Tabelle 2: Mineralogische Phasenzusammensetzung der verwendeten Flugaschen, des Portlandzement-Klinkers und -Zementes (QXRD nach Rietveld und TG)**

| Mineral | Einheit | FA1 | FA2 | FA3 | Aqu-K | Aqu-Z |
|---|---|---|---|---|---|---|
| Quarz | Gew.-% | 11,5 | 1,3 | 9,8 | -- | -- |
| Cristobalit | | 0,4 | -- | --- | -- | -- |
| Freikalk | | 9,3 | 2,8 | 1,1 | -- | -- |
| Periklas | | 2,8 | -- | 0,9 | 2,0 | 1,4 |
| Calcit | | -- | -- | -- | -- | 1,6 |
| Portlandit | | -- | -- | -- | -- | 1,3 |
| Gips | | -- | -- | -- | -- | 0,7 |
| Bassanit | | -- | -- | -- | -- | 0,9 |
| Anhydrit | | 10,4 | 1,3 | 0,6 | -- | 2,7 |
| Arkanit | | -- | -- | -- | 1,3 | 1,0 |
| Mullit | | -- | 1,9 | 25,1 | -- | -- |
| Gehlenit | | 6,3 | -- | -- | -- | -- |
| Merwinit | | 4,9 | -- | -- | -- | -- |
| Maghemit | | 1,2 | 1,6 | 1,4 | -- | -- |
| Hämatit | | 0,9 | -- | 0,8 | - | -- |
| Rutil | | -- | -- | 0,3 | -- | -- |
| Ye'elimit | | 3,1 | -- | -- | -- | -- |
| C₃S | | -- | 1,0 | -- | 36,3 | 32,3 |
| ΣC₂S | | 8,1 | 1,4 | 1,1 | 42,8 | 38,4 |
| C₄AF | | 3,1 | 0,7 | -- | 20,6 | 19,7 |
| Amorph | | 38,0 | 88,0 | 58,9 | -- | -- |

### Beispiel 1 Tₚᵤᵣ

Eine stöchiometrische Mischung aus CaCO₃ [Merck, p.a.], CaSO₄ [Merck, p.a.] und Quarzmehl [Merck, p.a.] wurde 1h bei 1100°C gebrannt, anschließend rapide gekühlt, gemahlen und ein weiteres Mal 1 h bei 1100°C gebrannt und rapide gekühlt.

### Beispiel 2 TK_{FA}

Die Rohmischung bestand aus 45 Gew.-% Kalkstein (K1) + 27 Gew.-% FA1 , 20 Gew.-% MicroA und 8 Gew.-% Quarzmehl (Merck, p.a.). Das Rohmehl wurde in bei 1100°C gesintert und durchlief nach dem Sintern zur Temperung ein Kühlprogramm bei dem die Temperatur über etwa 35 min von 1100°C auf 850°C gesenkt wurde. Der Klinker wurde dann rapide an der Luft abgekühlt.

### Beispiel 3 TK_{AGS}

Die Rohmischung bestand aus 58 Gew.-% K1 + 8 Gew.-% MK, 24 Gew.-% MircoA und 10 Gew.-% Quarzmehl (Merck, p.a.). Das Rohmehl durchlief dasselbe Programm wie in Beispiel 2.

**Tabelle 3: Chemische (berechnet) und mineralogische Zusammensetzung der Klinker aus den Beispielen 1 bis 3**

| **Oxide** | **Tₚᵤᵣ** | **TK_{FA}** | **TK_{AGS}** |
|---|---|---|---|
| SiO₂ | 25,00% | 21,30% | 22,16% |
| Al₂O₃ | -- | 4,75% | 4,94% |
| TiO₂ | -- | 0,38% | 0,04% |
| MnO | -- | 0,07% | 0,01% |
| Fe₂O₃ | -- | 1,96% | 0,45% |
| CaO | 58,34% | 53,20% | 55,34% |
| MgO | -- | 2,23% | 0,77% |
| K₂O | -- | 0,19% | 0,22% |
| Na₂O | -- | 0,04% | 0,02% |
| SO₃ | 16,66% | 15,44% | 16,06% |
| P₂O₅ | -- | 0,44% | 0,01% |
| **Phasen** | | | |
| Anhydrit | 0,4 | 0,3 | 0,2 |
| C₃A (cub) | -- | 2,2 | -- |
| C₃A (orth) | -- | 1,2 | 0,4 |
| C₂S a'H | -- | 2,7 | 1,4 |
| C₂S beta | -- | 5,7 | 3,2 |
| C₂S gamma | -- | 1,1 | 0,4 |
| 7C₂S | -- | 9,5 | 5,0 |
| Ternesit | 99,2 | 74,9 | 85,5 |
| Freikalk | <0,1 | 0,3 | 0,3 |
| Periklas | -- | 1,2 | 0,5 |
| C₄A₃S | -- | 9,3 | 7,0 |
| Augit | -- | 1,2 | 1,1 |
| Quarz | 0,4 | -- | -- |
| **Verhältnisse** | | | |
| CaO/Al₂O₃ | -- | 11,21 | 11,21 |
| Al₂O₃/Fe₂O₃ | -- | 2,42 | 10,92 |
| SO₃/ (Al₂O₃+Fe₂O₃) | -- | 2,30 | 2,98 |
| SO₃/SiO₂ | 0,67 | 0,72 | 0,72 |
| CaO/SO₃ | 3,50 | 3,45 | 3,45 |
| CaO/SiO₂ | 2,33 | 2,50 | 2,50 |
| MgO/SiO₂ | 0,00 | 0,10 | 0,03 |

### Beispiel 4

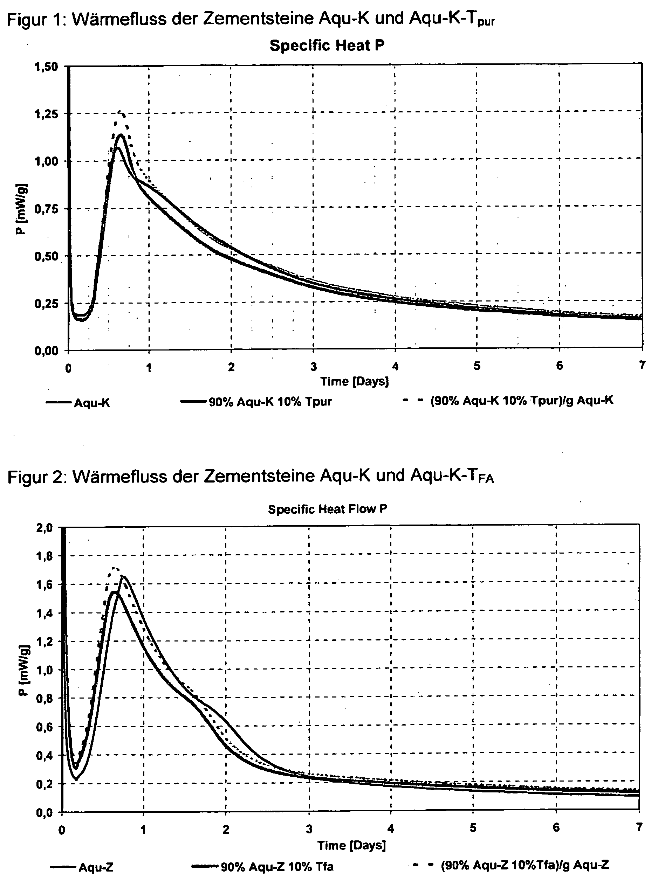

Die Interaktion von C₅S₂$ mit Portlanzement-Klinker und Portlandzement wurde zum einen durch_Messung des Hydratationsverlaufs an Pasten (W/B = 0,5) mit einem isothermen Differentialkalorimeter (TAM air) nachgewiesen (siehe Figuren 1 bis 3). Des Weiteren wurden Mischungen von Portlandzement-Klinker und Portlandzement mit T_{pur,} T_{FA} und T_{AGS} (+/-FA2) und als Referenz jeweils Mischungen des reinen Klinker und Zement angesetzt. Aus den Mischungen wurden mit dest. Wasser (W/B = 0,5) Pasten hergestellt und in luftdicht schließenden Plastikbeuteln bei 20°C gelagert. Die Zusammensetzungen der Mischungen und das Verhältnis Wasser zu Feststoff der Pasten sind in Tabelle 5 angegeben.

**Tabelle 5**

| Mischung | Tₚᵤᵣ | T_{FA} | T_{AGS} | Aqu-K | Aqu-Z | FA2 |
|---|---|---|---|---|---|---|
| | % | | | | | |
| Aqu-K | | | | 100 | | |
| Aqu-Z | | | | | 100 | |
| Aqu-Z + FA2 | | | | | 50 | 50 |
| Aqu-K + Tₚᵤᵣ | 10 | | | 90 | | |
| Aqu-K + T_{FA} | | 10 | | 90 | | |
| Aqu-K + T_{AGS} | | | 10 | 90 | | |
| Aqu-Z + Tₚᵤᵣ | 10 | | | | 90 | |
| Aqu-Z + T_{FA} | | 10 | | | 90 | |
| Aqu-Z + T_{AGS} | | | 10 | | 90 | |
| Aqu-Z + FA2 + Tₚᵤᵣ | 10 | | | | 45 | 45 |
| Aqu-Z + FA2 + T_{FA} | | 10 | | | 45 | 45 |
| Aqu-Z + FA2 + T_{AGS} | | | 10 | | 45 | 45 |

Es zeigte sich, dass alle Proben, welche Ternesit enthalten, eine frühere Verfestigung und höhere Festigkeiten aufweisen. Pasten die mit den erfindungsgemäßen Ternesitklinkern hergestellt wurden, zeigen teilweise bereits innerhalb von 30 Minuten bis 6 Stunden eine Verfestigung und nachfolgende Erhärtung. In der Tabelle 6 sind die Ergebnisse dieser Versuche zusammengestellt. "+ / -" steht für das Ansteifen der Pasten und ein oder mehrere "+" zeigen dabei die Verfestigung und den zunehmenden Härtegrad der Paste an, wobei "+++" für eine sehr hohe Festigkeit steht. Bei vergleichenden Mörtel- und Druckfestigkeitsversuchen korrelierte "+++" mit einer Festigkeit zwischen 2 und 10 MPa. Ein "-" zeigt an, dass keine wahrnehmbare Verfestigung eingetreten ist. Versuche mit einem CEM I 42.5 (Werk Leimen der HeidelbergCement AG, DE) ergaben vergleichbare Ergebnisse.

**Tabelle 6**

| Mischung | Zeit | | | | | | |
|---|---|---|---|---|---|---|---|
| | 1h | 2h | 4h | 6h | 1d | 2d | 7d |
| Aqu-K | - | - | -/+ | -/+ | ++ | ++ | +++ |
| Aqu-Z | - | - | + | + | + | ++ | +++ |
| Aqu-Z + FA2 | - | - | - | -/+ | -/+ | ++ | +++ |
| Aqu-K + Tₚᵤᵣ | - | -/+ | -/+ | -/+ | ++ | ++ | +++ |
| Aqu-K + T_{FA} | + | + | ++ | ++ | ++ | +++ | +++ |
| Aqu-K + T_{AGS} | + | + | ++ | ++ | ++ | +++ | +++ |
| Aqu-Z + Tₚᵤᵣ | - | - | + | + | ++ | ++ | +++ |
| Aqu-Z + T_{FA} | + | ++ | ++ | ++ | +++ | +++ | +++ |
| Aqu-Z + T_{AGS} | + | ++ | ++ | ++ | +++ | +++ | +++ |
| Aqu-Z + FA2 + Tₚᵤᵣ | - | -/+ | -/+ | -/+ | ++ | ++ | +++ |
| Aqu-Z + FA2 + T_{FA} | -/+ | -/+ | -/+ | + | ++ | +++ | +++ |
| Aqu-Z + FA2 + T_{AGS} | - | -/+ | + | + | ++ | +++ | +++ |

### Beispiel 5

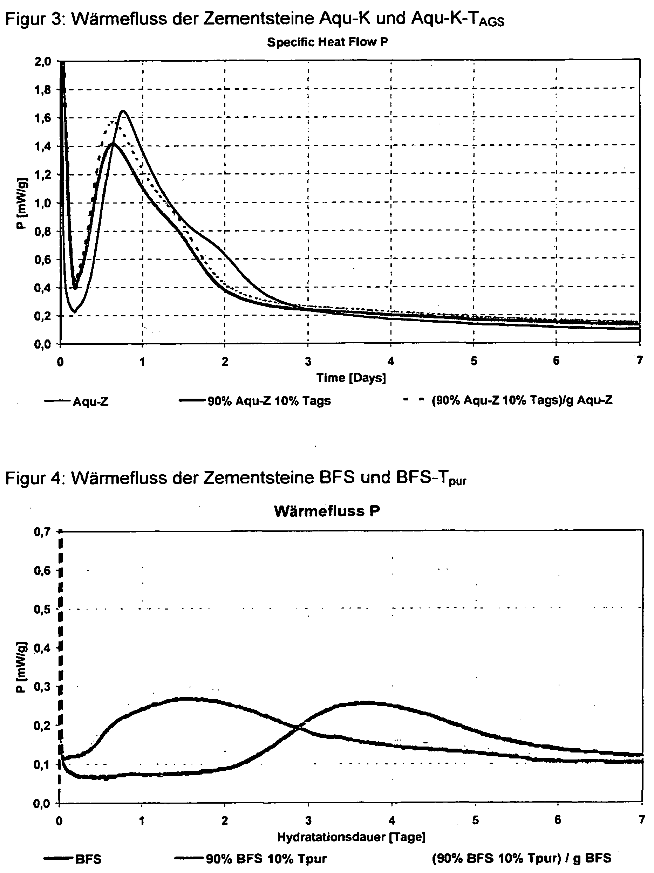

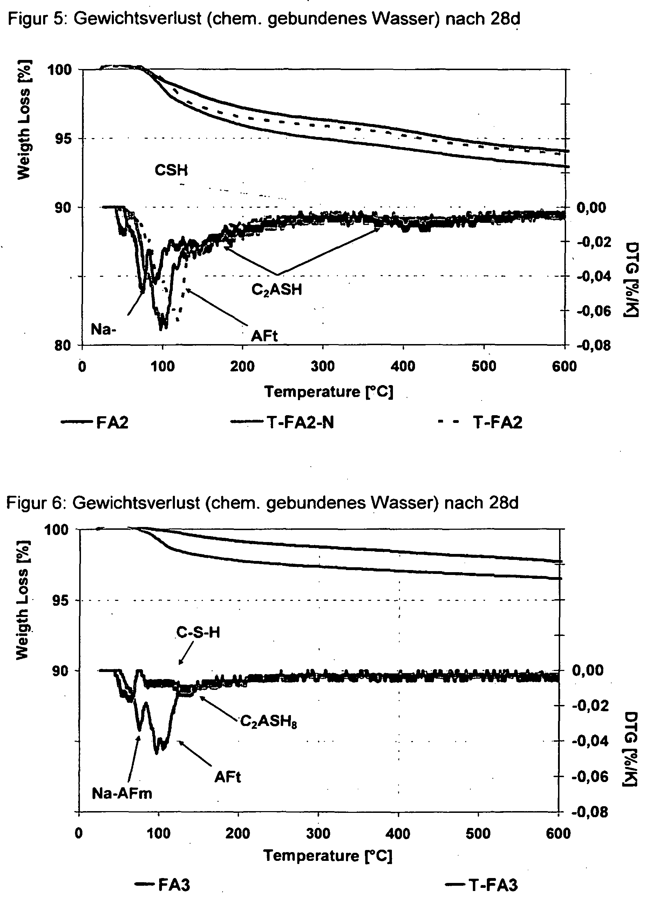

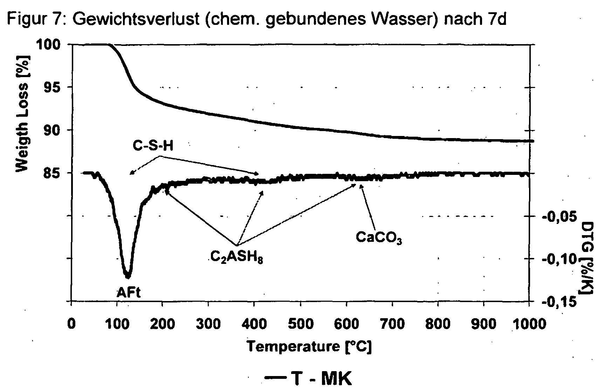

Die Interaktion von C₅S₂$ mit latent-hydraulischen und/oder puzzolanischen Materialien mit und ohne Zusatz von NaOH wurde zum einen durch Messung des Hydratationsverlaufs an Pasten aus Hüttensand (BFS) und Tₚᵤᵣ (Mischungen siehe Tab. 7) mit einem isothermen Differentialkalorimeter (TAM air) nachgewiesen (siehe Figur 4). Des Weiteren wurden Bindemittelleime (W/B = 0,5) aus Flugaschen, Metakaolin und C₅S₂$ hergestellt und deren Gehalt an chem. gebundenen Wasser nach 7 bzw. 28 Tagen bestimmt (siehe Figuren 5 bis 7). Bei den Pasten, enthaltend Tₚᵤᵣ, zeigt sich im Vergleich zum reinen BFS eine deutliche Verschiebung der Wärmeentwicklung hin zu früheren Zeiten. Bei den puzzolanischen Materialien zeigt sich eine signifikante Zunahme des chem. gebundenen Wasser, was die vermehrte Bildung von Hydratphasen und damit einhergehend die Erhöhung der Reaktivität dieser Stoffe anzeigt. Alle getesteten Stoffe zeigen eine Zunahme der Reaktivität in Gegenwart von CₛS₂$ und diese Mechanismen können zur Optimierung von Pörtlandkompositzementen insbesondere hinsichtlich der Frühfestigkeit und/oder der Dauerhaftigkeit, genutzt werden.

**Tabelle 7, untersuchte Mischungen**

| Mischung | Tpur | BFS | FA2 | FA3 | MK | NaOH |
|---|---|---|---|---|---|---|
| | % | | | | | Gew.-% |
| Bus + Tₚᵤᵣ | 10 | 90 | | | | |
| FA2 | | | 100 | | | 0,-5 |
| FA3 | | | | 100 | | 0,-5 |
| Tₚᵤᵣ + FA2 | 70 | | 30 | | | |
| Tₚᵤᵣ + FA2-N | 70 | | 30 | | | 0,-5 |
| Tₚᵤᵣ + FA3 | 70 | | | 30 | | 0,-5 |
| Tₚᵤᵣ + MK | 70 | | | | 30 | |

### Beispiel 6

Es erfolgte die Herstellung eines Klinkers entsprechend Beispiel 1, wobei die Sintertemperaturen sowie die Aufheizrate variiert wurden. Ebenfalls wurde bei einer zusätzlichen Mischung 0,1 Mol.-% Ca₃P₂O₈, bei gleich bleibendem CaO-Gehalt der Mischung, zugegeben. Die Abbildungen 8 und 9 zeigen die mineralogische Zusammensetzung der erzeugten Klinker. Klinker, welche P₂O₅ enthalten (Figur 9), zeigen über alle Temperaturen eine höhere Menge reaktiver α C₂S Polymorphe und Mischkristalle, die Stabilisierung von C_{S}S₂$ bei höheren Temperaturen und durchgehend geringere Freikalk-Gehalte.

## Patentansprüche

1. Bindemittel enthaltend Portlandzement in einer Menge im Bereich von 20 bis 95 Gew.-% und einen Ternesit-Zement in einer Menge im Bereich von 5 bis 80 Gew.-%, wobei sich alle Anteile des Bindemittels zu 100 % addieren, ein Gehalt an C₄(AₓF₍₁₋ₓ₎)₃$ maximal 5 Gew.-% beträgt, und wobei der Ternesit-Zement 20 bis 100 Gew.-% der Klinkerphase C₅S₂$ enthält und die weiteren Klinkerphasen (α; β) C₂S, C₄(AₓF₍₁₋ₓ₎)₃$ mit x von 0,1 bis 1,0, C₂(A_{y}F_{(1-y)}) mit y von 0,2 bis 0,8, reaktive Aluminate, Periklas (M) und Nebenphasen in folgenden Anteilen enthalten sind:
| | |
|---|---|
| (α, β) C₂S | 0 bis 80 Gew.-% |
| C₄(AₓF₍₁₋ₓ₎)₃$ | 0 bis < 15 Gew.-% |
| C₂(A_{y}F_{(1-y)}) | 0 bis 30 Gew.-% |
| Reaktive Aluminate | 0 bis 20 Gew.-% |
| Periklas (M) | 0 bis 25 Gew.-% |
| Nebenphasen | 0 bis 30 Gew.-% |
wobei sich die Anteile der Klinkerphasen zu 100 % addieren.

2. Bindemittel gemäß Anspruch 1, **dadurch gekennzeichnet, dass** es den Portlandzement in einer Menge im Bereich von 40 bis 90 Gew.-%, insbesondere 60 bis 85 Gew.-% und den Ternesit- Zement in einer Menge im Bereich von 10 bis 60 Gew.-%, insbesondere 15 bis 50 Gew.-% enthält, wobei sich alle Anteile des Bindemittels zu 100 % addieren.

3. Bindemittel gemäß Anspruch 1 oder 2, **dadurch gekennzeichnet, dass** natürliche und/oder künstliche latent hydraulische Materialien und/oder Puzzolane enthalten sind, wobei die Anleite von Bindemittel aus Ternesit und Portlandzement zu dem Anteil solcher Zugaben und/oder Mischungen von:
- Bindemittel 20 bis 95 Gew.-%, vorzugsweise 40 bis 80 Gew.-% und noch stärker bevorzugt 50 bis 70 Gew.-%
- CM 5 bis 80 Gew.-%, vorzugsweise 20 bis 60 Gew.-% und noch stärker bevorzugt 30 bis 50 Gew.-%
reichen, wobei die Werte auf die gesamte Menge an Bindemittel bezogen sind und sich die Anteile mit den restlichen Bindemittelkomponenten zu 100% addieren.

4. Bindemittel gemäß Anspruch 3, **dadurch gekennzeichnet, dass** die latent hydraulischen Materialien und/oder Puzzolane ausgewählt sind unter Ziegelmehl, Flugaschen, Tuff, Trass, Sedimenten mit hohem Anteil an löslicher Kieselsäure, getemperten Tonen und Schiefern, puzzolanischen künstlichen Gläsern, Hüttensand,laten-hydraulsichen künstlichen Gläsern, W Flugaschen und Kombinationen davon.

5. Bindemittel gemäß mindestens einem der Ansprüche 1 bis 4, **dadurch gekennzeichnet, dass** es zusätzlich weitere hydraulisch reaktive Materialien, wie Calciumaluminatzement, Geopolymerzement, Calciumsulfoaluminatzement und/oder nicht hydraulisch reaktive Materialien, wie gemahlenen Kalkstein, gefälltes CaCO₃, Ca(OH)₂, Mg(OH)₂, Silica fume sowie Kombinationen davon in einem Bereich von 1 bis 30 Gew.-%, vorzugsweise von 5 bis 20 Gew.-% enthält.

6. Bindemittel gemäß mindestens einem der Ansprüche 1 bis 5, **dadurch gekennzeichnet, dass** es als Zusatzmittel einen oder mehrere Abbinde- und / oder Erhärtungsbeschleuniger, vorzugsweise ausgewählt unter Komponenten mit verfügbarem Aluminium, die in Kontakt mit Wasser Aluminium, zum Beispiel in der Form von Al(OH)₄⁻ oder amorphes Al(OH)₃-Gel, freisetzen, wie lösliche Alkali-Aluminate [z.B. Na₂Al₂O₄, K₂Al₂O₄, etc.], amorphes Aluminium-hydroxid (z.B. Al(OH)₃) in einer Menge im Bereich von 0,01 bis 15 Gew.-%, vorzugsweise von 1 bis 8 Gew.-% enthält.

7. Bindemittel gemäß mindestens einem der Ansprüche 1 bis 6, **dadurch gekennzeichnet, dass** es als Zusatzmittel oder weitere Zusatzmittel Lithiumsalze und -hydroxide und/oder andere Alkalisalze und -hydroxide und Alkalisilikate enthält, wobei Zusatzmittel, wie zum Beispiel Alkalisalze, -silikate und -hydroxide, welche den pH-Wert der Lösung und damit einhergehend die Reaktivität von C₅S₂$ erhöhen, besonders bevorzugt sind.

8. Verfahren zur Herstellung eines Bindemittels enthaltend Portlandzement, **dadurch gekennzeichnet, dass** ein Ternesit-Klinker, der 20 bis 100 Gew.-% der Klinkerphase C₅S₂$ und die weiteren Klinkerphasen (α; β) C₂S, C₄(AₓF₍₁₋ₓ₎)₃$ mit x von 0,1 bis 1,0, C₂(A_{y}F_{(1-y)}) mit y von 0,2 bis 0,8, reaktive Aluminate, Periklas (M) und Nebenphasen in folgenden Anteilen:
| | |
|---|---|
| (α, β) C₂S | 0 bis 80 Gew.-% |
| C₄(AₓF₍₁₋ₓ₎)₃$ | 0 bis < 15 Gew.-% |
| C₂(A_{y}F_{(1-y)}) | 0 bis 30 Gew.-% |
| Reaktive Aluminate | 0 bis 20 Gew.-% |
| Periklas (M) | 0 bis 25 Gew.-% |
| Nebenphasen | 0 bis 30 Gew.-% |
enthält, wobei sich die Anteile der Klinkerphasen zu 100 % addieren, und der durch Sintern einer Rohmehlmischung, die mindestens Quellen für CaO, SiO₂, und SO₃ enthält, erhältlich ist, wobei die Temperatur beim Sintern im Bereich von 900 bis 1300 °C so eingestellt wird, dass der Ternesit-Klinker einen Gehalt an C₅S₂$ im Bereich von 20 bis 100 Gew.-% und einen Gehalt an C₄(AₓF₍₁₋ₓ₎)₃$ unter 15 Gew.-%, jeweils bezogen auf das Gesamtgewicht des Klinkers, aufweist oder ein Zement daraus in einer Menge im Bereich von 5 bis 80 Gew.-% und mindestens ein Portlandzementklinker oder ein Zement daraus in einer Menge im Bereich von 20 bis 95 Gew.-% miteinander vermischt werden, wobei der Gehalt an C₅S₂$ in dem Bindemittel mindestens 5 Gew.-% und ein Gehalt an C₄(AₓF₍₁₋ₓ₎)₃$ in dem Bindemittel maximal 5 Gew.-% beträgt.

9. Verfahren gemäß Anspruch 8, **dadurch gekennzeichnet, dass** der Ternesit-Klinker und der Portlandzementklinker gemeinsam oder getrennt, mit oder ohne Sulfatträger in Form von Alkali- und / oder Erdalkalisulfaten, vorzugsweise in Form von Gips und / oder Halbhydrat und / oder Anhydrit und / oder Magnesiumsulfat, auf Feinheiten (nach Blaine) im Bereich von 2000 bis 10000 cm²/g, vorzugsweise im Bereich von 3000 bis 6000 cm²/g und besonders bevorzugt von 4000 bis 5000 cm²/g gemahlen werden.

10. Verfahren gemäß Anspruch 9, **dadurch gekennzeichnet, dass** Puzzolane, latent-hydraulische Materialien oder Kombinationen davon gemeinsam mit dem Ternesitklinker und/oder dem Portlandzementklinker vermahlen werden.

11. Verfahren gemäß Anspruch 8, 9 oder 10, **dadurch gekennzeichnet, dass** der Ternesit-Zement eine Partikelgrößenverteilung mit einem d₅₀ kleiner 20 µm und d₉₀ kleiner 100 µm, oder einem d₅₀ kleiner 5 µm und einem d₉₀ kleiner 20 µm oder mit einem d₅₀ kleiner 0,1 µm und einem d₉₀ kleiner 2 µm aufweist.

12. Verwendung eines Bindemittels gemäß einem der Ansprüche 1 bis 7 oder erhältlich gemäß einem der Ansprüche 8 bis 11 in Kombination mit Gesteinskörnungen zur Herstellung von Beton, Mörtel oder Putz wobei ein Wasser/Bindemittelwert von 0,2 bis 2 eingestellt wird.

13. Verwendung eines Bindemittels gemäß einem der Ansprüche 1 bis 7 oder erhältlich gemäß einem der Ansprüche 8 bis 11 zur Immobilisierung von Schadstoffen oder als Dichtwandmasse, wobei vorzugsweise adsorptiv wirksame Zusätze wie Zeolithe und/oder Ionenaustauscherharze, zugefügt werden.

## Claims

1. A binder containing Portland cement in an amount ranging from 20 to 95% by weight and a ternesite cement in an amount ranging from 5 to 80% by weight, wherein all the contents of the binder add up to 100%, a content of C₄(AₓF₍₁₋ₓ₎)₃$ is maximum 5 % by weight, and wherein the ternesite cement contains 20 to 100% by weight of the clinker phase C₅S₂$ and the further clinker phases (α; β) C₂S, C₄(AₓF₍₁₋ₓ₎)₃$, where x is from 0.1 to 1.0, C₂(A_{y}F_{(1-y)}), where y is from 0.2 to 0.8, reactive aluminates, periclase (M) and secondary phases are present in the following contents:
| | |
|---|---|
| (α, β) C₂S | 0 to 80% by weight |
| C₄(AₓF₍₁₋ₓ₎)₃$ | 0 to < 15% by weight |
| C₂(A_{y}F_{(1-y)}) | 0 to 30% by weight |
| reactive aluminates | 0 to 20% by weight |
| periclase (M) | 0 to 25% by weight |
| secondary phases | 0 to 30% by weight, |
wherein the contents of the clinker phases add up to 100%.

2. The binder according to claim 1, **characterized in that** the binder contains the Portland cement in an amount ranging from 40 to 90% by weight, and more particularly from 60 to 85% by weight, and the ternesite cement in an amount ranging from 10 to 60% by weight, and more particularly from 15 to 50% by weight, wherein contents of the binder adding up to 100%.

3. The binder according to claim 1 or 2, **characterized in that** natural and/or synthetic latent hydraulic materials and/or pozzolans are present, wherein the amounts of binder from ternesite und Portland cement range relative to the amount of such additions and/or mixtures of:
- Binder from 20 to 95% by weight, preferably 40 to 80% by weight and more preferably from 50 to 70% by weight
- CM from 5 to 80% by weight, preferably 20 to 60% by weight and more preferably from 30 to 50% by weight,
wherein the values are relative to the total amount of binder, and the amounts add up to 100% together with the remaining binder components.

4. The binder according to claim 3, **characterized in that** the latent hydraulic materials and/or pozzolans are selected from brick dust, fly ashes, tuff, trass, sediments having a high content of soluble silica, annealed clays and shale, pozzolanic synthetic glasses, ground granulated blast furnace slag, latent hydraulic synthetic glasses, lime rich fly ashes and combinations thereof.

5. A binder according to at least one of claims 1 to 4, **characterized in that** the binder additionally contains further hydraulically reactive materials, such as calcium aluminate cement, geopolymer cement, calcium sulfoaluminate cement and/or not hydraulically reactive materials, such as ground limestone, precipitated CaCO₃, Ca(OH)₂, Mg(OH)₂, silica fume as well as combinations thereof, in a range from 1 to 30% by weight, and preferably from 5 to 20% by weight.

6. A binder according to at least one of claims 1 to 5, **characterized in that** the binder contains one or more setting accelerators and/or hardening accelerators as an admixture, which are preferably selected among components having available aluminum, which in contact with water liberate aluminum, for example in the form of Al(OH)⁻₄ or amorphous Al(OH)₃ gel, such as soluble alkali aluminates [for example Na₂Al₂O₄, K₂Al₂O₄, and the like], and amorphous aluminum hydroxide (for example Al(OH)₃), in an amount ranging from 0.01 to 15% by weight, and preferably from 1 to 8% by weight.

7. A binder according to at least one of claims 1 to 6, **characterized in that** the binder contains lithium salts and hydroxides and/or other alkali salts and hydroxides and alkali silicates as admixtures or further admixtures, with admixtures such as alkali salts, silicates and hydroxides, which increase the pH value of the solution and consequently the reactivity of C₅S₂$, being particularly preferred.

8. A method for producing a binder containing Portland cement, wherein a ternesite clinker, which contains 20 to 100% by weight of the clinker phase C₅S₂$ and the further clinker phases (α**;** β) C₂S, C₄(AₓF₍₁₋ₓ₎)₃$, where x is from 0.1 to 1.0, C₂(A_{y}F_{(1-y)}), where y is from 0.2 to 0.8, reactive aluminates, periclase (M) and secondary phases are present in the following contents:
| | |
|---|---|
| (α, β) C₂S | 0 to 80% by weight |
| C₄(AₓF₍₁₋ₓ₎)₃$ | 0 to < 15% by weight |
| C₂(A_{y}F_{(1-y)}) | 0 to 30% by weight |
| reactive aluminates | 0 to 20% by weight |
| periclase (M) | 0 to 25% by weight |
| secondary phases | 0 to 30% by weight, |
the contents of the clinker phases adding up to 100% and which is obtained by sintering a raw meal mixture, which contains at least sources for CaO, SiO₂, and SO₃, wherein the temperature during sintering is adjusted in the range of 900 to 1300°C such that the ternesite clinker has a content of C₅S₂$ in the range from 20 to 100 % by weight and a content of C₄(AₓF₍₁₋ₓ₎)₃$ of less than 15% by weight, in each case relative to the total weight of the clinker, or a cement produced therefrom, in an amount ranging from 5 to 80% by weight and at least one Portland cement clinker, or a cement produced therefrom, in an amount ranging from 20 to 95% by weight are mixed with each other, wherein the content of C₅S₂$ in the binder amounts to at least 5% by weight and a content of C₄(AₓF₍₁₋ₓ₎)₃$ in the binder amounts to a maximum of 5 % by weight.

9. The method according to claim 8, **characterized in that** the ternesite clinker and the Portland cement clinker are ground together or separately, with or without sulfate carriers in the form of alkali and/or alkaline earth sulfates, preferably in the form of gypsum and/or semihydrate and/or anhydrite and/or magnesium sulfate, to degrees of fineness (according to Blaine) ranging from 2000 to 10000 cm²/g, preferably ranging from 3000 to 6000 cm²/g and more preferably ranging from 4000 to 5000 cm²/g.

10. The method according to claim 9, **characterized in that** pozzolans, latent hydraulic materials or combinations thereof are ground together with the ternesite clinker and/or the Portland cement clinker

11. The method according to claim 8, 9, or 10, **characterized in that** the ternesite cement has a grain size distribution with d₅₀ less than 20 µm and d₉₀ less than 100 µm, or d₅₀ less than 5 µm and d₉₀ less than 20 µm, or d₅₀ less than 0.1 µm and d₉₀ less than 2 µm.

12. Use of a binder according to any one of claims 1 to 7, or obtainable according to any one of claims 8 to 11, in combination with aggregate for the production of concrete, mortar or plaster, wherein a water/binder value of 0.2 to 2 is adjusted.

13. Use of a binder according to any one of claims 1 to 7, or obtainable according to any one of claims 8 to 11, for the immobilization of harmful substances, or as a sealing wall compound, wherein preferably adsorptive effective additives such as zeolites and/or ion exchange resins are added.

## Revendications

1. Liant contenant du ciment Portland en une quantité dans la plage de 20 à 95 % et un ciment à base de ternésite en une quantité dans la plage de 5 à 80 % en poids, dans lequel toutes les proportions du liant s'additionnent pour donner 100 %, une teneur en C₄(AₓF₍₁₋ₓ₎)₃$ est inférieure ou égale à 5 % en poids, et dans lequel le ciment à base de ternésite contient 20 à 100 % en poids de la phase clinker C₅S₂$ et les autres phases clinker (α ; β) C₂S, C₄(AₓF₍₁₋ₓ₎)₃$ avec x compris entre 0,1 et 1,0, C₂(A_{y}F_{(1-y)}) avec y compris entre 0,2 et 0,8, des aluminates réactifs, une périclase (M) et des phases secondaires sont contenus dans les proportions suivantes :
| | |
|---|---|
| (α, β) C₂S | 0 à 80 % en poids |
| C₄(AₓF₍₁₋ₓ₎)₃$ | 0 à < 15 % en poids |
| C₂(A_{y}F_{(1-y)}) | 0 à 30 % en poids |
| Aluminates réactifs | 0 à 20 % en poids |
| Périclase (M) | 0 à 25 % en poids |
| Phases secondaires | 0 à 30 % en poids |
dans lequel les proportions des phases clinker s'additionnent pour donner 100 %.

2. Liant selon la revendication 1, **caractérisé en ce qu'**il contient le ciment Portland en une quantité dans la plage de 40 à 90 % en poids, en particulier 60 à 85 % en poids et le ciment à base de ternésite en une quantité dans la plage de 10 à 60 % en poids, en particulier 15 à 50 % en poids, dans lequel toutes les proportions du liant s'additionnent pour donner 100 %.

3. Liant selon la revendication 1 ou 2, **caractérisé en ce qu'**il contient des pouzzolanes et/ou des matières hydrauliques latentes naturelles et/ou artificielles, dans lequel les proportions de liant issues des ciments Portland et à base de ternésite par rapport à la proportion de ces ajouts et/ou mélanges atteignent :
- liant 20 à 95 % en poids, de manière préférée 40 à 80 % en poids et de manière plus préférée 50 à 70 % en poids.
- CM 5 à 80 % en poids, de manière préférée 20 à 60 % en poids et de manière plus préférée 30 à 50 % en poids,
dans lequel les valeurs se rapportent à la quantité totale de liant et les proportions s'additionnent aux composants de liant résiduels pour donner 100 %.

4. Liant selon la revendication 3, **caractérisé en ce que** les matières hydrauliques latentes et/ou les pouzzolanes sont choisies parmi de la brique pilée, des cendres volantes, du tuf, du trass, des sédiments contenant une proportion élevée d'acide silicique soluble, des argiles et des schistes calcinés, des verres synthétiques pouzzolaniques, du sable de laitier, des verres synthétiques hydrauliques latents, des cendres volantes calciques et des combinaisons de ceux-ci.

5. Liant selon l'une quelconque des revendications 1 à 4, **caractérisé en ce qu'**il comprend de manière supplémentaire d'autres matières hydrauliquement réactives, comme du ciment à base d'aluminate de calcium, du ciment géopolymère, du ciment à base de sulfo-aluminate de calcium et/ou des matières non hydrauliquement réactives, comme le calcaire moulu, le CaCO₃ précipité, Ca(OH)₂, Mg(OH)₂, des fumées de silice ainsi que des combinaisons de ceux-ci en une plage de 1 à 30 % en poids, de manière préférée de 5 à 20 % en poids.

6. Liant selon l'une quelconque des revendications 1 à 5, **caractérisé en ce qu'**il contient en tant qu'additif un ou plusieurs accélérateur(s) de prise et/ou de durcissement, sélectionné(s) de manière préférée parmi des composants contenant de l'aluminium disponible, qui, au contact de l'eau, libèrent de l'aluminium, par exemple sous la forme Al(OH)₄⁻ ou de gel Al(OH)₃ amorphe, tels que les aluminates alcalins solubles [par exemple Na₂Al₂O₄, K₂Al₂O₄, etc.], de l'hydroxyde d'aluminium amorphe (par exemple Al(OH)₃) en une quantité dans la plage de 0,01 à 15 % en poids, de manière préférée de 1 à 8 % en poids.

7. Liant selon l'une quelconque des revendications 1 à 6, **caractérisé en ce qu'**il contient, en tant qu'additifs ou autres additifs, des sels et des hydroxydes de lithium et/ou d'autres sels et hydroxydes alcalins et des silicates alcalins, dans lequel des additifs comme par exemple des sels, des silicates et des hydroxydes alcalins qui augmentent la valeur pH de la solution, et par conséquent la réactivité de C₅S₂$, sont particulièrement préférés.

8. Procédé de fabrication d'un liant contenant du ciment Portland, **caractérisé en ce qu'**un clinker à base de ternésite, qui contient 20 à 100 % en poids de la phase clinker C₅S₂$ et les autres phases clinker (α ; β) C₂S, C₄(AₓF₍₁₋ₓ₎)₃$ avec x compris entre 0,1 et 1,0, C₂(A_{y}F_{(1-y)}) avec y compris entre 0,2 et 0,8, des aluminates réactifs, de la périclase (M) et des phases secondaires dans les proportions suivantes :
| | |
|---|---|
| (α, β) C₂S | 0 à 80 % en poids |
| C₄(AₓF₍₁₋ₓ₎)₃$ | 0 à < 15 % en poids |
| C₂(A_{y}F_{(1-y)}) | 0 à 30 % en poids |
| Aluminates réactifs | 0 à 20 % en poids |
| Périclase (M) | 0 à 25 % en poids |
| Phases secondaires | 0 à 30 % en poids |
dans lequel les proportions des phases clinker s'additionnent pour donner 100 %, et qui peut être obtenu par clinkérisation d'un mélange de crus contenant au moins des sources de CaO, SiO₂, et SO₃, dans lequel la température lors de la clinkérisation est ajustée dans la plage de 900 à 1 300°C de telle manière que le clinker à base de ternésite présente une teneur en C₅S₂$ dans la plage de 20 à 100 % en poids et une teneur en C₄(AₓF₍₁₋ₓ)₃$ inférieure à 15 % en poids, respectivement par rapport au poids total du clinker, ou un ciment obtenu à partir dudit clinker en une quantité dans la plage de 5 à 80 % en poids et au moins un clinker de ciment Portland ou un ciment obtenu à partir dudit clinker en une quantité dans la plage de 20 à 95 % en poids sont mélangés les uns avec les autres, dans lequel la teneur en C₅S₂$ dans le liant est supérieure ou égale à 5 % en poids et une teneur en C₄(AₓF₍₁₋ₓ₎)₃$ dans le liant est inférieure ou égale à 5 % en poids.

9. Procédé selon la revendication 8, **caractérisé en ce que** le clinker à base de ternésite et le clinker de ciment Portland sont moulus en commun ou séparément, avec ou sans substrat sulfaté sous la forme de sulfates alcalins et/ou alcalinoterreux, de manière préférée sous la forme de gypse et/ou d'hémihydrate et/ou d'anhydrite et/ou de sulfate de magnésium, jusqu'à des finesses (selon Blaine) dans la plage de 2 000 à 10 000 cm²/g, de manière préférée dans la plage de 3 000 à 6 000 cm²/g et de manière particulièrement préférée dans la plage de 4 000 à 5 000 cm²/g.

10. Procédé selon la revendication 9, **caractérisé en ce que** des pouzzolanes, des matières hydrauliques latentes ou des combinaisons de ceux-ci sont moulues en commun avec le clinker à base de ternésite et/ou le clinker de ciment Portland.

11. Procédé selon la revendication 8, 9 ou 10, **caractérisé en ce que** le ciment à base de ternésite présente une répartition de tailles de particule avec d₅₀ inférieur à 20 µm et d₉₀ inférieur à 100 µm, ou d₅₀ inférieur à 5 µm et d₉₀ inférieur à 20 µm ou avec d₅₀ inférieur à 0,1 µm et d₉₀ inférieur à 2 µm.

12. Utilisation d'un liant selon l'une quelconque des revendications 1 à 7 ou pouvant être obtenu selon l'une quelconque des revendications 8 à 11 en combinaison avec des grains de roche en vue de la fabrication de béton, de mortier ou de crépi, dans lequel une valeur eau/liant est ajustée entre 0,2 et 2.

13. Utilisation d'un liant selon l'une quelconque des revendications 1 à 7 ou pouvant être obtenu selon l'une quelconque des revendications 8 à 11 en vue d'une immobilisation de substances nocives ou en tant que matière pour rideau étanche où l'on ajoute des additifs actifs de manière préférée par absorption c
